# EUROPEAN PATENT APPLICATION

(11) **EP 4 667 961 A1**
(43) Date of publication of application: **24.12.2025**
(21) Application number: 25183507.0
(22) Date of filing: 17.06.2025
(51) Int. Cl.: G01S 7/00, G01S 7/03, G01S 13/536

(54) **MICROWAVE SENSOR WITH WIRELESS COMMUNICATION FUNCTION**

(30) Priority: 21.06.2024 CN 202410813775
(71) Applicant: Xiamen PVTECH Co., Ltd., Xiamen, Fujian 361101 (CN)
(72) Inventor: LIN, TENG, Xiamen, 361101 (CN); LU, FUXING, Xiamen, 361101 (CN)
(74) Representative: Lang, Christian

(57) **Abstract**

A microwave sensor includes a wireless communication module, switching module, signal transceiver antenna, first amplifier, signal transmitting antenna, mixer, signal receiving antenna and processing module. The processing module controls the wireless communication module to perform wireless communication function when the switching module is switched to the signal transceiver antenna. The wireless communication module generates a continuous carrier signal when the switching module is switched to the first amplifier, and the continuous carrier signal is transmitted to the signal transmitting antenna and the mixer to cause the signal transmitting antenna to transmit a radar signal. The signal receiving antenna receives the reflected signal of the radar signal, and the mixer uses the continuous carrier signal as a local oscillator signal and generates an intermediate frequency signal according to the reflected signal and local oscillator signal. The mixer transmits the intermediate frequency signal to the processing module to perform signal processing.

## Description

### TECHNICAL FIELD

The present invention relates to a microwave sensor, in particular to a microwave sensor with wireless communication function.

### BACKGROUND

Most currently available microwave sensors cannot provide wireless communication function, which significantly limits the applications thereof.

Some currently available microwave sensors integrate both a wireless communication module and a microwave sensing module. However, such circuit structure designs fail to provide a stable signal source for the microwave sensing modules. Additionally, these circuit structure designs generate severe phase noise.

Therefore, how to develop a microwave sensor capable of effectively addressing the aforementioned problems has become an urgent issue.

### SUMMARY

One embodiment of the present invention provides a microwave sensor with wireless communication function, which includes a wireless communication module, a switching module, a signal transceiver antenna, a first amplifier, a signal transmitting antenna, a mixer, a signal receiving antenna and a processing module. The switching module is connected to the wireless communication module. The signal transceiver antenna is connected to the switching module. The first amplifier is connected to the switching module. The signal transmitting antenna is connected to the first amplifier. The mixer is connected to the first amplifier. The signal receiving antenna is connected to the mixer. The processing module is connected to the mixer and the wireless communication module. The processing module controls the wireless communication module to perform wireless communication function when the switching module is switched to the signal transceiver antenna. The wireless communication module generates a continuous carrier signal when the switching module is switched to the first amplifier, and the continuous carrier signal is transmitted to the signal transmitting antenna and the mixer after the continuous carrier signal passes through the first amplifier to cause the signal transmitting antenna to transmit a radar signal. The signal receiving antenna receives the reflected signal of the radar signal, and the mixer uses the continuous carrier signal as a local oscillator signal and generates an intermediate frequency signal according to the reflected signal and the local oscillator signal. The mixer transmits the intermediate frequency signal to the processing module, and the processing module performs signal processing according to the intermediate frequency signal.

In one embodiment, the microwave sensor further includes a first filter. The first amplifier is connected to the switching module via the first filter, and the continuous carrier signal is transmitted to the signal transmitting antenna and the mixer after the continuous carrier signal passes through the first filter and the first amplifier.

In one embodiment, the first filter is a bandpass filter.

In one embodiment, the microwave sensor further includes a second amplifier. The signal receiving antenna is connected to the mixer via the second amplifier, and the reflected signal is transmitted to the mixer after the reflected signal passes through the second amplifier.

In one embodiment, the first amplifier is a power amplifier and the second amplifier is a low-noise amplifier.

In one embodiment, the processing module includes a second filter, an analog-to-digital converter, a digital signal processor, and a controller. The second filter is connected to the switching module and the analog-to-digital converter. The analog-to-digital converter is connected to the digital signal processor. The digital signal processor is connected to the controller. The controller is connected to the wireless communication module.

In one embodiment, the second filter is a low-pass filter.

In one embodiment, the intermediate frequency signal is transmitted to the analog-to-digital converter after the intermediate frequency signal passes through the second filter, causing the analog-to-digital converter to generate a digital baseband signal. The digital signal processor performs signal processing according to the digital baseband signal to generate a sensing signal. The controller analyzes the sensing signal to obtain the motion information of a target object.

In one embodiment, the motion information includes the moving speed of the target object and/or the distance between the controller and the target object.

In one embodiment, the switching module is a single-pole double-throw switch.

The microwave sensor with wireless communication function in accordance with the embodiments of the present invention may have the following advantages:
(1) In one embodiment of the present invention, the microwave sensor includes a wireless communication module, a switching module, a signal transceiver antenna, a first amplifier, a signal transmitting antenna, a mixer, a signal receiving antenna and a processing module. The switching module is connected to the wireless communication module. The signal transceiver antenna is connected to the switching module. The first amplifier is connected to the switching module. The signal transmitting antenna is connected to the first amplifier. The mixer is connected to the first amplifier. The signal receiving antenna is connected to the mixer. The processing module is connected to the mixer and the wireless communication module. The processing module controls the wireless communication module to perform wireless communication function when the switching module is switched to the signal transceiver antenna. The wireless communication module generates a continuous carrier signal when the switching module is switched to the first amplifier, and the continuous carrier signal is transmitted to the signal transmitting antenna and the mixer after the continuous carrier signal passes through the first amplifier to cause the signal transmitting antenna to transmit a radar signal. The signal receiving antenna receives the reflected signal of the radar signal, and the mixer uses the continuous carrier signal as a local oscillator signal and generates an intermediate frequency signal according to the reflected signal and the local oscillator signal. The mixer transmits the intermediate frequency signal to the processing module, and the processing module performs signal processing according to the intermediate frequency signal. Through the above circuit design and operation mechanism, the microwave sensor can reuse signals transmitted by the wireless communication module as a microwave signal source for the microwave sensor, enabling the microwave sensor to provide both wireless communication function and microwave sensing function. Therefore, the microwave sensor can be more comprehensive in application and more flexible in use.
(2) In one embodiment of the present invention, the microwave sensor features a special circuit design and operation mechanism that enables the microwave sensor to reuse signals transmitted by the wireless communication module as a microwave signal source for the microwave sensor. Therefore, the microwave sensor can have a stable signal source, which can effectively improve the performance of the microwave sensor and meet actual requirements.
(3) In one embodiment of the present invention, the microwave sensor features the special circuit design and operation mechanism that enables the microwave sensor to reuse signals transmitted by the wireless communication module as the microwave signal source for the microwave sensor. The above circuit design and operation mechanism can significantly reduce phase noise of the microwave sensor in order to greatly improve the reliability thereof. Therefore, the microwave sensor can meet actual requirements.
(4) In an embodiment of the present invention, the microwave sensor features the special circuit design and operation mechanism that enables the microwave sensor to reuse signals transmitted by the wireless communication module as the microwave signal source for the microwave sensor. Therefore, the microwave sensor does not require a separate signal source circuit, which can simplify the circuit design thereof. Consequently, the cost of the microwave sensor can be effectively reduced while still achieving high performance, enabling the microwave sensor to meet the requirements of different applications.
(5) In an embodiment of the present invention, the microwave sensor can be directly applied to various intelligent systems to achieve different intelligent functions and applications. Therefore, the microwave sensor is not only extremely versatile in application but also conforms to future development trends.
(6) In an embodiment of the present invention, the microwave sensor has a simple design and can achieve the desired technical effects while reducing the cost thereof. Therefore, the microwave sensor can achieve high practicality to meet the needs of different users.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a schematic view of a circuit structure of a microwave sensor with wireless communication function in accordance with one embodiment of the present invention.
FIG. 2 is a first schematic view of the microwave sensor with wireless communication function in operation in accordance with one embodiment of the present invention.
FIG. 3 is a second schematic view of the microwave sensor with wireless communication function in operation in accordance with one embodiment of the present invention.
FIG. 4 is a schematic view of a circuit structure of a microwave sensor with wireless communication function in accordance with another embodiment of the present invention.
FIG. 5 is a first schematic view of the microwave sensor with wireless communication function in operation in accordance with another embodiment of the present invention.
FIG. 6 is a second schematic view of the microwave sensor with wireless communication function in operation in accordance with another embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

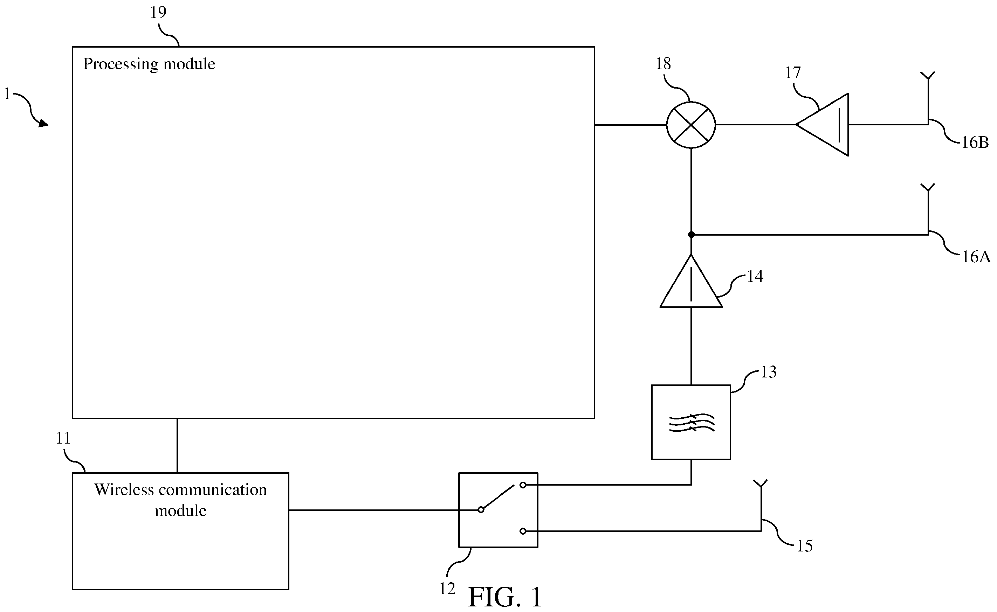

Please refer to FIG. 1, which is a schematic view of a circuit structure of a microwave sensor with wireless communication function in accordance with one embodiment of the present invention. As shown in FIG. 1, the microwave sensor 1 includes a wireless communication module 11, a switching module 12, a first filter 13, a first amplifier 14, a signal transceiver antenna 15, a signal transmitting antenna 16A, a second amplifier 17, a mixer 18, a signal receiving antenna 16B, and a processing module 19.

The switching module 12 is connected to the wireless communication module 11. The wireless communication module 11 may be any currently available wireless communication circuit capable of generating wireless signals. The circuit structure of the wireless communication module 11 should be well-known to those skilled in the art and thus will not be described in detail here. In this embodiment, the switching module 12 is a single-pole double-throw (SPDT) switch. In another embodiment, the switching module 12 may alternatively be a MOSFET, BJT, or other similar component.

The signal transceiver antenna 15 is connected to the switching module 12.

The first amplifier 14 is connected to the switching module 12 via the first filter 13. In this embodiment, the first filter 13 is a bandpass filter. In another embodiment, the first filter 13 may be replaced with any currently available filter according to actual requirements.

The signal transmitting antenna 16A and the mixer 18 are connected to the first amplifier 14. In this embodiment, the first amplifier 14 is a power amplifier. In another embodiment, the first amplifier 14 may alternatively be replaced with any filter having similar function.

The signal receiving antenna 16B is connected to the mixer 18 via the second amplifier 17. In this embodiment, the second amplifier 17 is a low-noise amplifier. In another embodiment, the second amplifier 17 may alternatively be replaced with any filter having similar function.

The processing module 19 is connected to the mixer 18 and the wireless communication module 11. The processing module 19 may be a circuit having filtering function, signal conversion function, and signal processing function.

The embodiment just exemplifies the present invention and is not intended to limit the scope of the present invention; any equivalent modification and variation according to the spirit of the present invention is to be also included within the scope of the following claims and their equivalents.

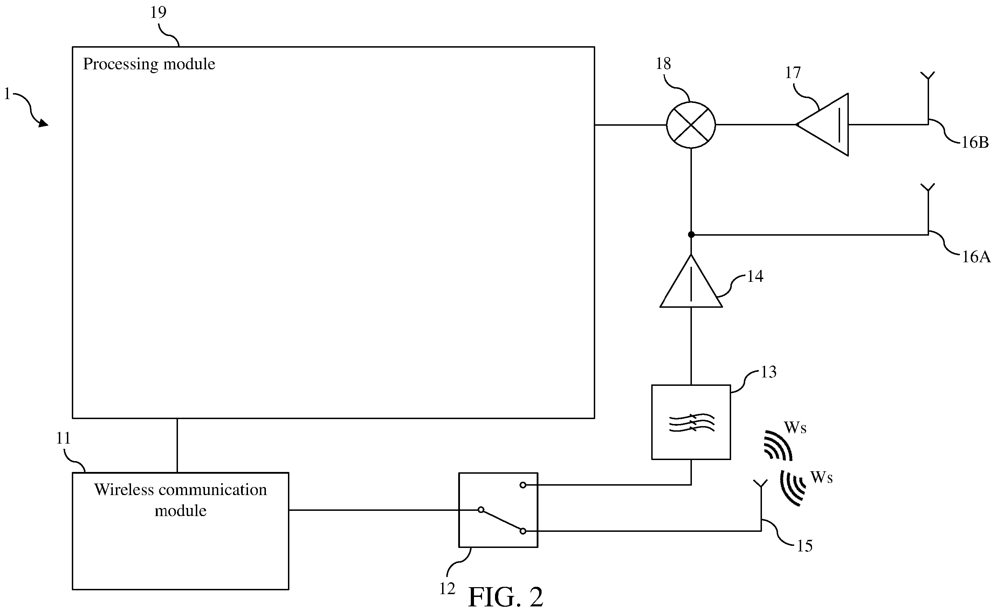

Please refer to FIG. 2, which is a first schematic view of the microwave sensor with wireless communication function in operation in accordance with one embodiment of the present invention. As shown in FIG. 2, when the switching module 12 is switched to the signal transceiver antenna 15, the processing module 19 controls the wireless communication module 11 to perform wireless communication function, thereby transmitting or receiving a wireless signals Ws via the signal transceiver antenna 15.

The embodiment just exemplifies the present invention and is not intended to limit the scope of the present invention; any equivalent modification and variation according to the spirit of the present invention is to be also included within the scope of the following claims and their equivalents.

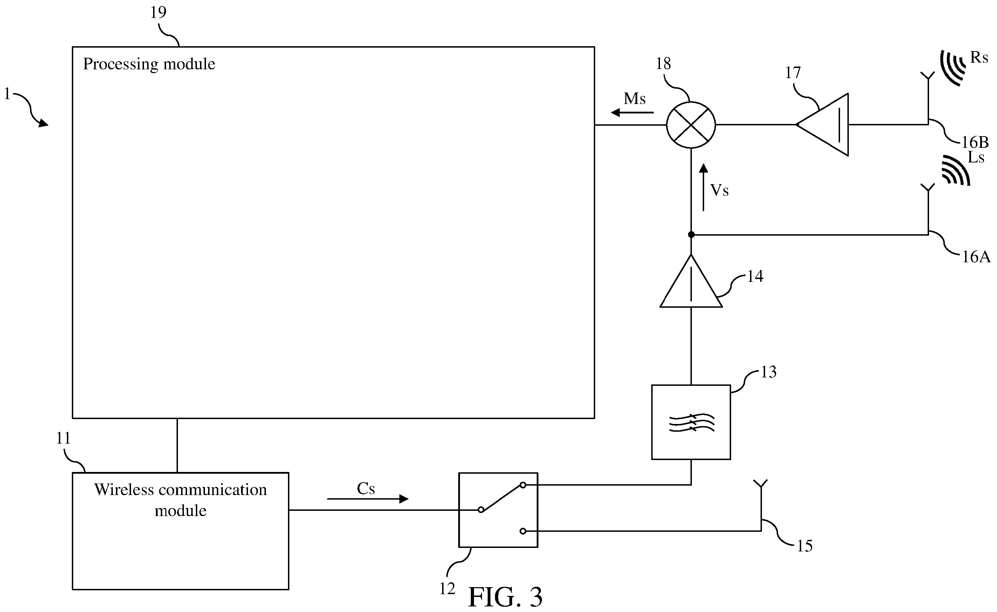

Please refer to FIG. 3, which is a second schematic view of the microwave sensor with wireless communication function in operation in accordance with one embodiment of the present invention. As shown in FIG. 3, when the switching module 12 is switched to the first filter 13 (first amplifier 14), the wireless communication module 11 generates a continuous carrier signal Cs. The continuous carrier signal Cs passes through the first filter 13 to filter out higher harmonics (second harmonic, third harmonic, etc.) of the continuous carrier signal Cs, then is transmitted to the first amplifier 14. The first amplifier 14 amplifies the continuous carrier signal Cs and transmits which to the signal transmitting antenna 16A and the mixer 18. Then, the signal transmitting antenna 16A transmits the signal amplified by the first amplifier 14 as a radar signal Ls. Simultaneously, the mixer 18 uses the signal amplified by the first amplifier 14 (continuous carrier signal Cs) as a local oscillator signal Vs. Next, the signal receiving antenna 16B receives a reflected signal Rs generated by a target object (such as a person, vehicle, etc.) reflecting the radar signal Ls. The reflected signal Rs is transmitted to the mixer 18 after passing through the second amplifier 17. Finally, the mixer 18 generates an intermediate frequency signal Ms according to the reflected signal Rs and the local oscillator signal Vs and transmits the intermediate frequency signal Ms to the processing module 19. The processing module 19 performs signal processing according to the intermediate frequency signal Ms to generate a sensing signal and analyzes the sensing signal to obtain the motion information of the target object. The motion information includes the moving speed of the target object and/or the distance between the processing module 19 and the target object.

Through the above circuit design and operation mechanism, the microwave sensor 1 can reuse signals transmitted by the wireless communication module 11 as a microwave signal source for the microwave sensor 1, enabling the microwave sensor 1 to provide both wireless communication function and microwave sensing function. Therefore, the microwave sensor 1 can be more comprehensive in application and more flexible in use.

Additionally, as previously stated, the microwave sensor 1 features a special circuit design and operation mechanism that enables the microwave sensor 1 to reuse signals transmitted by the wireless communication module 11 as a microwave signal source for the microwave sensor 1. Therefore, the microwave sensor 1 can have a stable signal source, which can effectively improve the performance of the microwave sensor 1 and meet actual requirements.

Furthermore, in this embodiment, the microwave sensor 1 features the special circuit design and operation mechanism that enables the microwave sensor 1 to reuse signals transmitted by the wireless communication module 11 as the microwave signal source for the microwave sensor 1. The above circuit design and operation mechanism can significantly reduce phase noise of the microwave sensor 1, greatly improving the reliability thereof. Therefore, the microwave sensor 1 can meet actual requirements.

Moreover, in this embodiment, the microwave sensor 1 features the special circuit design and operation mechanism that enables the microwave sensor 1 to reuse signals transmitted by the wireless communication module 11 as the microwave signal source for the microwave sensor 1. Therefore, the microwave sensor 1 does not require a separate signal source circuit, which can simplify the circuit design thereof. Consequently, the cost of the microwave sensor 1 can be effectively reduced while still achieving high performance, enabling the microwave sensor 1 to meet the requirements of different applications.

The embodiment just exemplifies the present invention and is not intended to limit the scope of the present invention; any equivalent modification and variation according to the spirit of the present invention is to be also included within the scope of the following claims and their equivalents.

It is worthy to point out that most currently available microwave sensors cannot provide wireless communication function, which significantly limits the applications thereof. Some currently available microwave sensors integrate both a wireless communication module and a microwave sensing module. However, such circuit structure designs fail to provide a stable signal source for the microwave sensing modules. Additionally, these circuit structure designs generate severe phase noise. By contrast, according to one embodiment of the present invention, the microwave sensor includes a wireless communication module, a switching module, a signal transceiver antenna, a first amplifier, a signal transmitting antenna, a mixer, a signal receiving antenna and a processing module. The switching module is connected to the wireless communication module. The signal transceiver antenna is connected to the switching module. The first amplifier is connected to the switching module. The signal transmitting antenna is connected to the first amplifier. The mixer is connected to the first amplifier. The signal receiving antenna is connected to the mixer. The processing module is connected to the mixer and the wireless communication module. The processing module controls the wireless communication module to perform wireless communication function when the switching module is switched to the signal transceiver antenna. The wireless communication module generates a continuous carrier signal when the switching module is switched to the first amplifier, and the continuous carrier signal is transmitted to the signal transmitting antenna and the mixer after the continuous carrier signal passes through the first amplifier to cause the signal transmitting antenna to transmit a radar signal. The signal receiving antenna receives the reflected signal of the radar signal, and the mixer uses the continuous carrier signal as a local oscillator signal and generates an intermediate frequency signal according to the reflected signal and the local oscillator signal. The mixer transmits the intermediate frequency signal to the processing module, and the processing module performs signal processing according to the intermediate frequency signal. Through the above circuit design and operation mechanism, the microwave sensor can reuse signals transmitted by the wireless communication module as a microwave signal source for the microwave sensor, enabling the microwave sensor to provide both wireless communication function and microwave sensing function. Therefore, the microwave sensor can be more comprehensive in application and more flexible in use.

According to one embodiment of the present invention, the microwave sensor features a special circuit design and operation mechanism that enables the microwave sensor to reuse signals transmitted by the wireless communication module as a microwave signal source for the microwave sensor. Therefore, the microwave sensor can have a stable signal source, which can effectively improve the performance of the microwave sensor and meet actual requirements.

Also, according to one embodiment of the present invention, the microwave sensor features the special circuit design and operation mechanism that enables the microwave sensor to reuse signals transmitted by the wireless communication module as the microwave signal source for the microwave sensor. The above circuit design and operation mechanism can significantly reduce phase noise of the microwave sensor in order to greatly improve the reliability thereof. Therefore, the microwave sensor can meet actual requirements.

Further, according to one embodiment of the present invention, the microwave sensor features the special circuit design and operation mechanism that enables the microwave sensor to reuse signals transmitted by the wireless communication module as the microwave signal source for the microwave sensor. Therefore, the microwave sensor does not require a separate signal source circuit, which can simplify the circuit design thereof. Consequently, the cost of the microwave sensor can be effectively reduced while still achieving high performance, enabling the microwave sensor to meet the requirements of different applications.

Moreover, according to one embodiment of the present invention, the microwave sensor can be directly applied to various intelligent systems to achieve different intelligent functions and applications. Therefore, the microwave sensor is not only extremely versatile in application but also conforms to future development trends.

Furthermore, according to one embodiment of the present invention, the microwave sensor has a simple design and can achieve the desired technical effects while reducing the cost thereof. Therefore, the microwave sensor can achieve high practicality to meet the needs of different users. As set forth above, the microwave sensor can indeed achieve great technical effects.

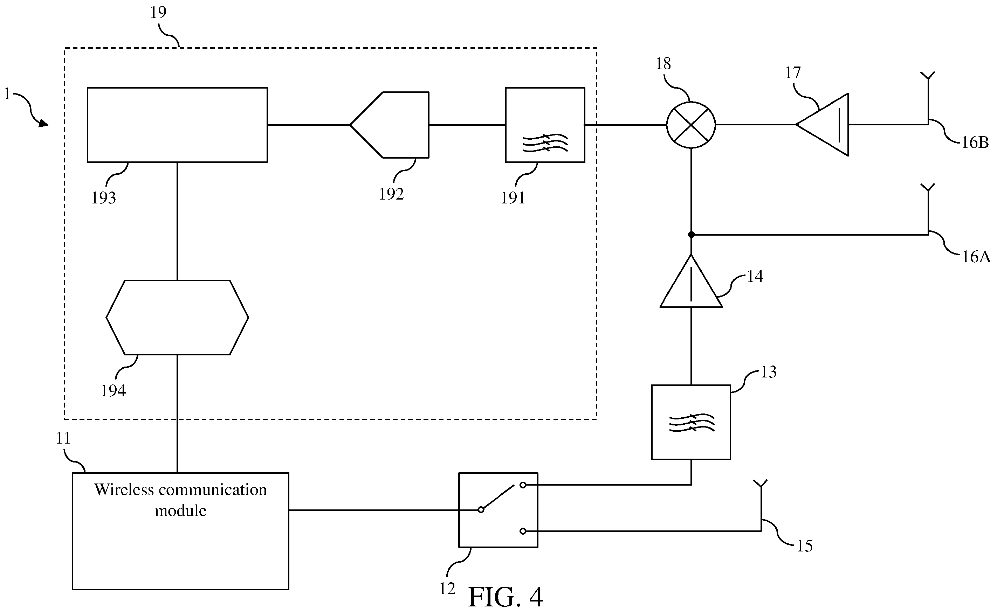

Please refer to FIG. 4, which is a schematic view of a circuit structure of a microwave sensor with wireless communication function in accordance with another embodiment of the present invention. As shown in FIG. 4, the microwave sensor 1 includes a wireless communication module 11, a switching module 12, a first filter 13, a first amplifier 14, a signal transceiver antenna 15, a signal transmitting antenna 16A, a second amplifier 17, a mixer 18, a signal receiving antenna 16B, and a processing module 19.

The switching module 12 is connected to the wireless communication module 11. The wireless communication module 11 may be any currently available wireless communication circuit capable of generating wireless signals.

The signal transceiver antenna 15 is connected to the switching module 12.

The first amplifier 14 is connected to the switching module 12 via the first filter 13.

The signal transmitting antenna 16A and the mixer 18 are connected to the first amplifier 14.

The signal receiving antenna 16B is connected to the mixer 18 via the second amplifier 17.

The processing module 19 is connected to the mixer 18 and the wireless communication module 11.

The above components are similar to those in the previous embodiment and thus will not be described in detail. The difference between this embodiment and the previous embodiment is that the processing module 19 includes a second filter 191, an analog-to-digital converter 192, a digital signal processor 193, and a controller 194. The second filter 191 is connected to the switching module 12 and the analog-to-digital converter 192. The analog-to-digital converter 192 is connected to the digital signal processor 193. The digital signal processor 193 is connected to the controller 194. The controller 194 is connected to the wireless communication module 11. In this embodiment, the second filter 191 is a low-pass filter. In another embodiment, the second filter 191 may be replaced with any currently available filter. In this embodiment, the controller 194 is a microcontroller (MCU). In another embodiment, the controller 194 may alternatively be a central-processing unit (CPU), application-specific integrated circuit (ASIC), field-programmable gate array (FPGA), or other similar component.

The embodiment just exemplifies the present invention and is not intended to limit the scope of the present invention; any equivalent modification and variation according to the spirit of the present invention is to be also included within the scope of the following claims and their equivalents.

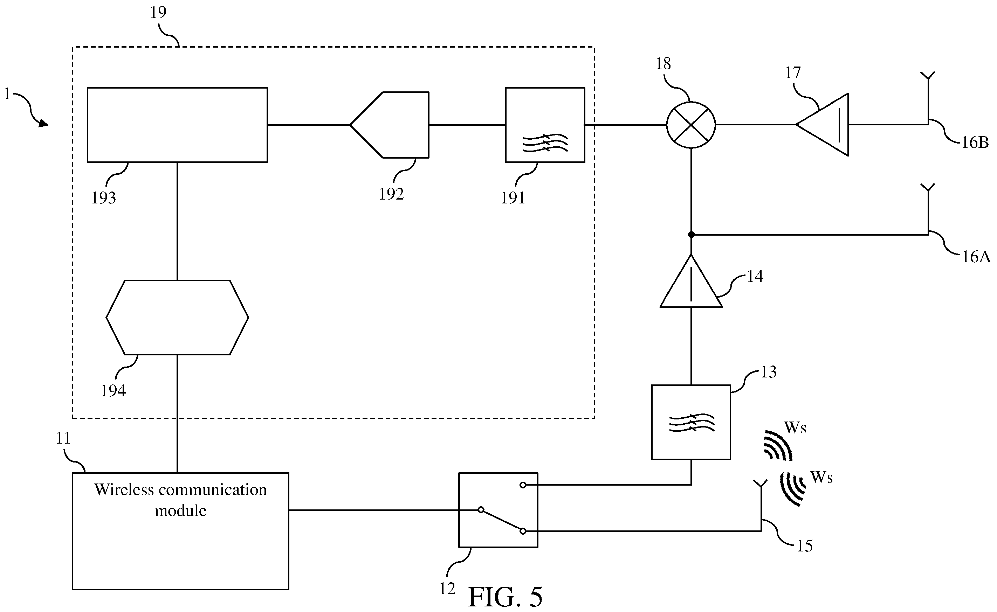

Please refer to FIG. 5, which is a first schematic view of the microwave sensor with wireless communication function in operation in accordance with another embodiment of the present invention. As shown in FIG. 5, when the switching module 12 is switched to the signal transceiver antenna 15, the controller 194 controls the wireless communication module 11 to perform wireless communication function, thereby transmitting or receiving wireless signals Ws via the signal transceiver antenna 15.

The embodiment just exemplifies the present invention and is not intended to limit the scope of the present invention; any equivalent modification and variation according to the spirit of the present invention is to be also included within the scope of the following claims and their equivalents.

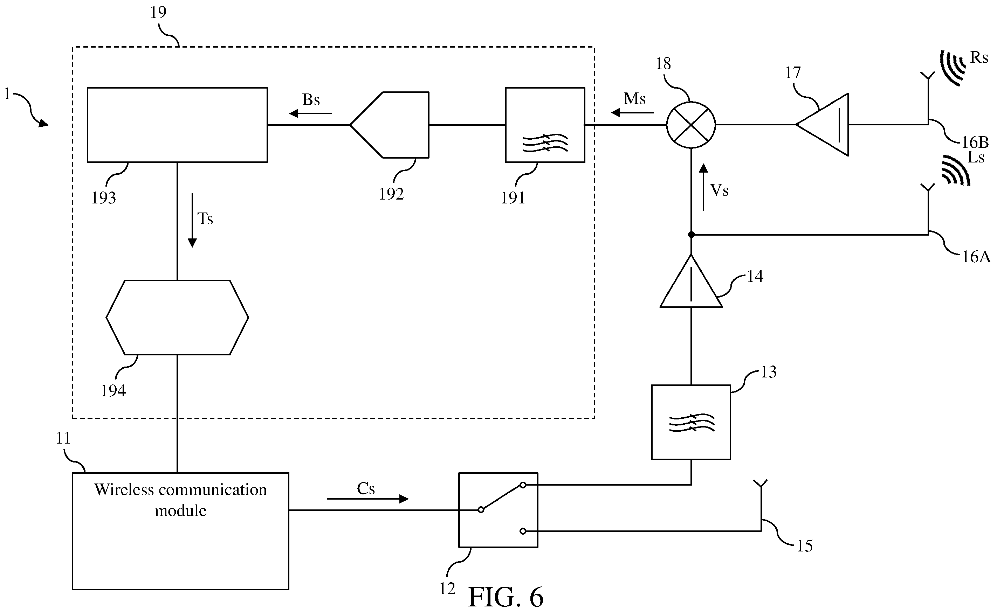

Please refer to FIG. 6, which is a second schematic view of the microwave sensor with wireless communication function in operation in accordance with another embodiment of the present invention. As shown in FIG. 6, when the switching module 12 is switched to the first filter 13 (first amplifier 14), the wireless communication module 11 generates a continuous carrier signal Cs. The continuous carrier signal Cs passes through the first filter 13 to filter out higher harmonics (second harmonic, third harmonic, etc.) of the continuous carrier signal Cs, then is transmitted to the first amplifier 14. The continuous carrier signal Cs includes a fundamental frequency signal f0, second harmonic, third harmonic, and other higher-order harmonics. The first filter 13 can filter out the higher harmonics of the continuous carrier signal Cs, retaining only the fundamental frequency signal f0. The first amplifier 14 amplifies the continuous carrier signal Cs (fundamental frequency signal f0) and transmits the continuous carrier signal Cs to the signal transmitting antenna 16A and the mixer 18. Then, the signal transmitting antenna 16A transmits the signal amplified by the first amplifier 14 as a radar signal Ls. Simultaneously, the mixer 18 uses the signal amplified by the first amplifier 14 (fundamental frequency signal f0) as a local oscillator signal Vs. Next, the signal receiving antenna 16B receives a reflected signal Rs generated by a target object (such as a person, vehicle, etc.) reflecting the radar signal Ls. According to the Doppler effect, when a radar signal with frequency ft reaches a moving object, it reflects back a signal with frequency fr, where fr=ft+Δf (Δf is the frequency difference caused by the Doppler effect; ft=f0). The reflected signal Rs is transmitted to the mixer 18 after passing through the second amplifier 17. Finally, the mixer 18 generates an intermediate frequency signal Ms (intermediate frequency signal Ms=Δf) according to the reflected signal Rs and the local oscillator signal Vs and transmits the intermediate frequency signal Ms to the processing module 19. The intermediate frequency signal Ms passes through the second filter 191 and is transmitted to the analog-to-digital converter 192, causing the analog-to-digital converter 192 to generate a digital baseband signal Bs. The digital signal processor 193 performs signal processing according to the digital baseband signal Bs to generate a sensing signal Ts. The controller 194 analyzes the sensing signal Ts to obtain the motion information of the target object. The motion information includes the moving speed of the target object and/or the distance between the controller 194 and the target object.

Via the above circuit design and operation mechanism, the microwave sensor 1 can reuse signals transmitted by the wireless communication module 11 as a microwave signal source for the microwave sensor 1, enabling the microwave sensor 1 to provide both wireless communication function and microwave sensing function. Therefore, the microwave sensor 1 can be more comprehensive in application and more flexible in use.

The microwave sensor can be directly applied to various intelligent systems (such as intelligent home systems, intelligent parking systems, etc.) to achieve different intelligent functions and applications. Therefore, the microwave sensor is not only extremely versatile in application but also conforms to future development trends.

The embodiment just exemplifies the present invention and is not intended to limit the scope of the present invention; any equivalent modification and variation according to the spirit of the present invention is to be also included within the scope of the following claims and their equivalents.

To sum up, according to one embodiment of the present invention, the microwave sensor includes a wireless communication module, a switching module, a signal transceiver antenna, a first amplifier, a signal transmitting antenna, a mixer, a signal receiving antenna and a processing module. The switching module is connected to the wireless communication module. The signal transceiver antenna is connected to the switching module. The first amplifier is connected to the switching module. The signal transmitting antenna is connected to the first amplifier. The mixer is connected to the first amplifier. The signal receiving antenna is connected to the mixer. The processing module is connected to the mixer and the wireless communication module. The processing module controls the wireless communication module to perform wireless communication function when the switching module is switched to the signal transceiver antenna. The wireless communication module generates a continuous carrier signal when the switching module is switched to the first amplifier, and the continuous carrier signal is transmitted to the signal transmitting antenna and the mixer after the continuous carrier signal passes through the first amplifier to cause the signal transmitting antenna to transmit a radar signal. The signal receiving antenna receives the reflected signal of the radar signal, and the mixer uses the continuous carrier signal as a local oscillator signal and generates an intermediate frequency signal according to the reflected signal and the local oscillator signal. The mixer transmits the intermediate frequency signal to the processing module, and the processing module performs signal processing according to the intermediate frequency signal. Through the above circuit design and operation mechanism, the microwave sensor can reuse signals transmitted by the wireless communication module as a microwave signal source for the microwave sensor, enabling the microwave sensor to provide both wireless communication function and microwave sensing function. Therefore, the microwave sensor can be more comprehensive in application and more flexible in use.

According to one embodiment of the present invention, the microwave sensor features a special circuit design and operation mechanism that enables the microwave sensor to reuse signals transmitted by the wireless communication module as a microwave signal source for the microwave sensor. Therefore, the microwave sensor can have a stable signal source, which can effectively improve the performance of the microwave sensor and meet actual requirements.

Also, according to one embodiment of the present invention, the microwave sensor features the special circuit design and operation mechanism that enables the microwave sensor to reuse signals transmitted by the wireless communication module as the microwave signal source for the microwave sensor. The above circuit design and operation mechanism can significantly reduce phase noise of the microwave sensor in order to greatly improve the reliability thereof. Therefore, the microwave sensor can meet actual requirements.

Further, according to one embodiment of the present invention, the microwave sensor features the special circuit design and operation mechanism that enables the microwave sensor to reuse signals transmitted by the wireless communication module as the microwave signal source for the microwave sensor. Therefore, the microwave sensor does not require a separate signal source circuit, which can simplify the circuit design thereof. Consequently, the cost of the microwave sensor can be effectively reduced while still achieving high performance, enabling the microwave sensor to meet the requirements of different applications.

Moreover, according to one embodiment of the present invention, the microwave sensor can be directly applied to various intelligent systems to achieve different intelligent functions and applications. Therefore, the microwave sensor is not only extremely versatile in application but also conforms to future development trends.

Furthermore, according to one embodiment of the present invention, the microwave sensor has a simple design and can achieve the desired technical effects while reducing the cost thereof. Therefore, the microwave sensor can achieve high practicality to meet the needs of different users.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A microwave sensor with wireless communication function, comprising:
a wireless communication module;
a switching module connected to the wireless communication module;
a signal transceiver antenna connected to the switching module;
a first amplifier connected to the switching module;
a signal transmitting antenna connected to the first amplifier;
a mixer connected to the first amplifier;
a signal receiving antenna connected to the mixer; and
a processing module connected to the mixer and the wireless communication module;
wherein the processing module is configured to control the wireless communication module to perform wireless communication function when the switching module is switched to the signal transceiver antenna, wherein the wireless communication module is configured to generate a continuous carrier signal when the switching module is switched to the first amplifier, and the continuous carrier signal is transmitted to the signal transmitting antenna and the mixer after the continuous carrier signal passes through the first amplifier to cause the signal transmitting antenna to transmit a radar signal, wherein the signal receiving antenna is configured to receive a reflected signal of the radar signal, and the mixer is configured to use the continuous carrier signal as a local oscillator signal and generate an intermediate frequency signal according to the reflected signal and the local oscillator signal, wherein the mixer is configured to transmit the intermediate frequency signal to the processing module, and the processing module is configured to perform signal processing according to the intermediate frequency signal.

2. The microwave sensor with wireless communication function as claimed in claim 1, further comprising a first filter, wherein the first amplifier is connected to the switching module via the first filter, and the continuous carrier signal is transmitted to the signal transmitting antenna and the mixer after the continuous carrier signal passes through the first filter and the first amplifier.

3. The microwave sensor with wireless communication function as claimed in claim 2, wherein the first filter is a bandpass filter.

4. The microwave sensor with wireless communication function as claimed in claim 1, further comprising a second amplifier, wherein the signal receiving antenna is connected to the mixer via the second amplifier, and the reflected signal is transmitted to the mixer after the reflected signal passes through the second amplifier.

5. The microwave sensor with wireless communication function as claimed in claim 4, wherein the first amplifier is a power amplifier and the second amplifier is a low-noise amplifier.

6. The microwave sensor with wireless communication function as claimed in claim 1, wherein the processing module comprises a second filter, an analog-to-digital converter, a digital signal processor, and a controller, wherein the second filter is connected to the switching module and the analog-to-digital converter, and the analog-to-digital converter is connected to the digital signal processor, and the digital signal processor is connected to the controller, and the controller is connected to the wireless communication module.

7. The microwave sensor with wireless communication function as claimed in claim 6, wherein the second filter is a low-pass filter.

8. The microwave sensor with wireless communication function as claimed in claim 6, wherein the intermediate frequency signal is transmitted to the analog-to-digital converter after the intermediate frequency signal passes through the second filter so as to cause the analog-to-digital converter to generate a digital baseband signal, wherein the digital signal processor is configured to perform signal processing according to the digital baseband signal to generate a sensing signal, wherein the controller is configured to analyze the sensing signal to obtain a motion information of a target object.

9. The microwave sensor with wireless communication function as claimed in claim 8, wherein the motion information comprises a moving speed of the target object and/or a distance between the controller and the target object.

10. The microwave sensor with wireless communication function as claimed in claim 1, wherein the switching module is a single-pole double-throw switch.
